# EUROPEAN PATENT APPLICATION

(11) **EP 3 951 245 A1**
(43) Date of publication of application: **09.02.2022**
(21) Application number: 20189994.5
(22) Date of filing: 07.08.2020
(51) Int. Cl.: F17C 13/08

(54) **COLLECTOR SYSTEM FOR CYLINDER TRAILERS AND RELATED CYLINDER TRAILER**

(71) Applicant: PICCINI PAOLO S.p.A., 52037 Sansepolcro (AR) (IT)
(72) Inventor: CORBUCCI, Bruno, 52037 Sansepolcro (AR) (IT); TAGLIAFERRI, Erik, 52031 Anghiari (AR) (IT); CARRARA, Paolo, 24030 Valbrembo (BG) (IT)
(74) Representative: Brunacci, Marco

(57) **Abstract**

The collector system (1) for cylinder trailers comprises:
- one sustaining structure (2) associable with a cylinder trailer (3) intended for the transport of a plurality of storage tanks (B) of a fluid, each of the storage tanks (B) comprising:
- one main body (E, G1, G2) of elongated conformation; and
- one taking fitting (R1, R2) for taking the fluid from the storage tank (B), associated with at least one end of the main body (E, G1, G2);

- a plurality of collectors (5, 6) of the fluid, associated with the sustaining structure (2), each one connected in a fluid-operated manner to one or more of the storage tanks (B) through the corresponding taking fitting (R1, R2); and
- at least one outlet fitting (7) of the fluid, connected in a fluid-operated manner to one of the collectors (5, 6).

## Description

### Technical Field

The present invention relates to a collector system for cylinder trailers and to a related cylinder trailer provided with such a collector system.

### Background Art

The cylinder trailer, by definition according to ADR (European Agreement concerning the international carriage of Dangerous goods by Road), is a battery-vehicle provided with a plurality of storage tanks connected to each other by a collector.

The cylinder trailer comprises a supporting surface, on which the storage tanks are fixed in a stable manner, and movement means, such as e.g. wheels, associated with the supporting surface itself.

The cylinder trailer is intended to transport a plurality of storage tanks of a fluid along at least one direction of travel.

Specifically, the cylinder trailer is associable with a driving cab intended to move it along the direction of travel.

During stationing, the cylinder trailer is intended for the deposit and storage of the fluid.

Each of the storage tanks is of the type, e.g., of a gas cylinder under pressure and the fluid may be of the type of natural gas, hydrogen, oxygen or other types of gas.

The cylinder trailer is generally used to transport the fluid to supply additional storage tanks or, in the case of natural gas, to feed areas not supplied by the national distribution network or in an emergency situation.

The storage tank generally contains a volume of fluid comprised between 40 and 5000 liters, at a pressure comprised between 200 and 300 bar.

The storage tank comprises at least one main body of elongated conformation, extending along a corresponding longitudinal axis and at least one fitting to take the fluid, arranged at one end of the main body.

The cylinder trailers of known type comprise a collector connected to the taking fittings and adapted to convey the inlet and/or outlet fluid flows from the taking fittings themselves and to transfer them to other means of fluid treatment/storage, such as reduction cabins or storage tanks.

Specifically, the collectors of known type comprise a connecting piping, which can be connected to the treatment/storage means, connected in fluid-operated manner to the taking fittings and inside which flow the inlet and/or outlet fluid flows from the taking fittings themselves.

The collectors of known type do have some drawbacks.

In fact, known solutions do not allow a flexible control of the fluid contained inside the storage tanks.

Through known solutions, the fluids contained in the storage tanks flow indiscriminately to the outlet fitting and it is not possible to intervene on the individual fluid flows in order to regulate the pressure and/or flow rate thereof.

Moreover, according to the regulations in force, in some situations of use, the cylinder trailers are subject to flow rate limits of the fluid exiting the outlet fitting, i.e. the cylinder trailer can deliver the fluid only up to a flow rate value below a preset limit. For example, according to Italian regulations, the limit is set at 1000 Sm³/h.

This drawback greatly limits the performance of the cylinder trailer and leads to quite a long time to refuel the treatment/storage means.

Not least, the cylinder trailers of known type can be connected to an individual treatment/storage means, which further limits the performance of the cylinder trailer itself.

### Description of the Invention

The main aim of the present invention is to devise a collector system for cylinder trailers and a related cylinder trailer that allow flexible control of the fluid contained inside the storage tanks.

Another object of the present invention is to devise a collector system for cylinder trailers and a related cylinder trailer that allow selecting and delivering the fluid contained in one or more storage tanks, leaving the others unchanged.

Another object of the present invention is to devise a cylinder trailer that allows selecting and delivering the fluid from both fittings of each storage tank.

Another object of the present invention is to devise a collector system for cylinder trailers and a related cylinder trailer that allow overcoming the aforementioned drawbacks of the prior art in a simple, rational, easy, effective to use and low-cost solution.

The objects set out above are achieved by the present collector system for cylinder trailers having the characteristics of claim 1.

The objects set out above are further achieved by the present cylinder trailer having the characteristics of claim 9.

### Brief Description of the Drawings

Other characteristics and advantages of the present invention will be more evident from the description of a preferred, but not exclusive, embodiment of a collector system for cylinder trailers and a related cylinder trailer, illustrated by way of an indicative, yet non-limiting example, in the attached tables of drawings in which:
Figure 1 is a schematic axonometric representation of a first embodiment of the collector system according to the invention, applied to a cylinder trailer;
Figure 2 is a schematic detailed representation of the fluid-operated connections of a second embodiment of the collector system according to the invention;
Figure 3 is a schematic representation of a third embodiment of the collector system according to the invention;
Figure 4 is a schematic representation of a fourth embodiment of the collector system according to the invention;

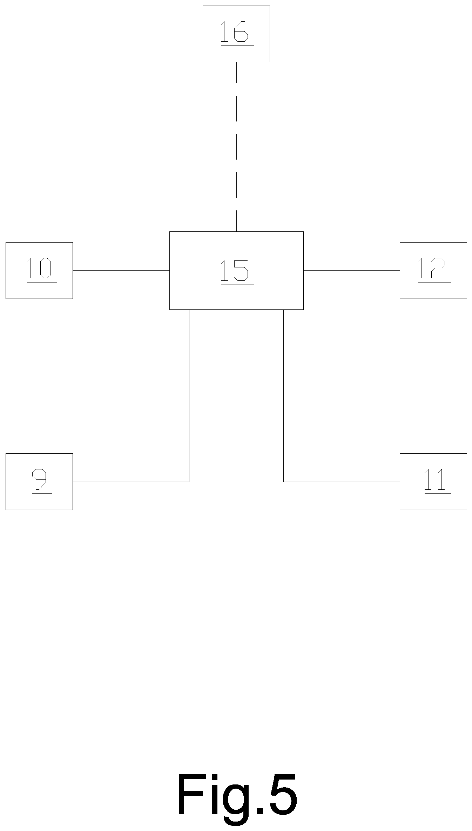

Figure 5 shows an operating diagram of the collector system according to the invention;
Figure 6 is an axonometric view of a first embodiment of the cylinder trailer according to the invention;
Figure 7 is an axonometric view of a second embodiment of the cylinder trailer according to the invention.

### Embodiments of the Invention

With particular reference to these figures, reference numeral 1 globally indicates a collector system for cylinder trailers.

The collector system 1 according to the invention comprises at least one sustaining structure 2 associable with a cylinder trailer 3.

In the context of the present discussion, the expression "cylinder trailer" means a road vehicle comprising a resting plane 4 and movement means, such as wheels, associated with the latter.

The cylinder trailer 3 is intended for the transport of a plurality of storage tanks B of a fluid.

Each of the storage tanks B is of the type, e.g., of a gas cylinder under pressure and the fluid may be of the type of natural gas, hydrogen, oxygen or other types of gas.

The storage tank B contains, e.g., a volume of fluid comprised between 40 and 5000 liters at a pressure comprised between 200 and 300 bar.

Each of the storage tanks B comprises at least one main body E, G1, G2 of elongated conformation and at least one taking fitting R1, R2 for taking and/or adding the fluid from/into the storage tank B.

The taking fitting R1, R2 is associated with one end of the main body E, G1, G2.

The collector system 1 also comprises a plurality of collectors 5, 6 of the fluid, associated with the sustaining structure 2, each one connected in a fluid-operated manner to one or more of the storage tanks B through the corresponding taking fitting R1, R2.

The collector system 1 then comprises at least one fluid outlet fitting 7, connected in a fluid-operated manner to one of the collectors 5, 6.

The outlet fitting 7 is connectable to treatment/storage means, not shown in detail in the figures, to transfer the fluid to the latter.

For example, the treatment/storage means can be of the type of boilers or storage tanks.

The collector system 1 conveniently comprises a plurality of connecting elements 8 positioned between the various components of the collector system itself and adapted to carry the fluid.

The connecting elements 8 are of the type, e.g., of pipes, at least partly made of a material compatible with the fluid being conveyed.

For example, the compatible material is steel.

Each collector 5, 6 is of the type, e.g., of a gas distributor block provided with a plurality of internal channels, in particular, loading channels, through which the inlet flows are conveyed into the collector 5, 6 and unloading channels, through which the outlet flows are conveyed out of the collector itself.

Each collector 5, 6 is, in turn, made at least partly of a material compatible with the fluid being conveyed.

For example, the compatible material is steel.

The special solution of having a plurality of collectors 5, 6 allows an extremely flexible control of the fluid flows exiting the taking fittings R1, R2.

Through the plurality of collectors 5, 6, the fluid coming from the storage tanks B is selected and conveyed to the outlet fitting 7.

The collector system 1 allows, therefore, a flexible control of the fluid flows available in the cylinder trailer 3.

Through the collector system 1 it is, in fact, possible to take the fluid only from some storage tanks B and leave the others unchanged.

The collector system 1 conveniently comprises a valve assembly 9, 10, 11 adapted to regulate the fluid flow coming from the storage tanks B.

By means of the valve assembly 9, 10, 11, e.g., it is possible to modulate the fluid pressure at the outlet of the corresponding storage tank B.

The valve assembly 9, 10, 11 will be described in more detail later in the present discussion.

The collectors 5, 6 advantageously comprise a main collector 5 connected to the outlet fitting 7 and at least one secondary collector 6 connected to the main collector 5.

The secondary collector 6 receives the fluid from one or more storage tanks B and conveys it to the main collector 5.

The main collector 5, in turn, receives the fluid from one or more of the other storage tanks B and from the secondary collector 6.

The fluid flow exiting the main collector 5 is conveyed to the outlet fitting 7 through which it is transferred to the treatment/storage means.

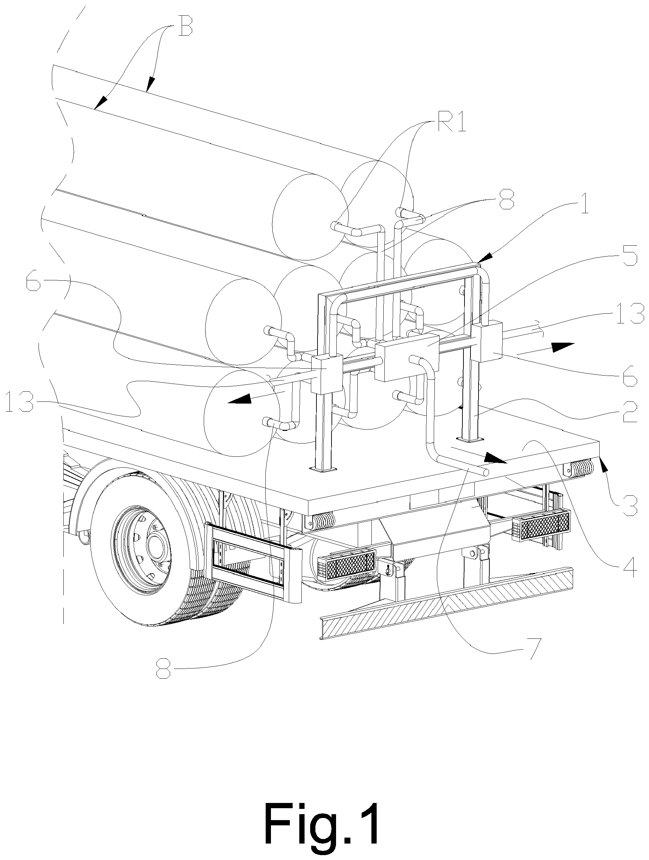

In a first embodiment of the present collector system 1, schematically shown in Figure 1, the collector system 1 comprises only one outlet fitting 7.

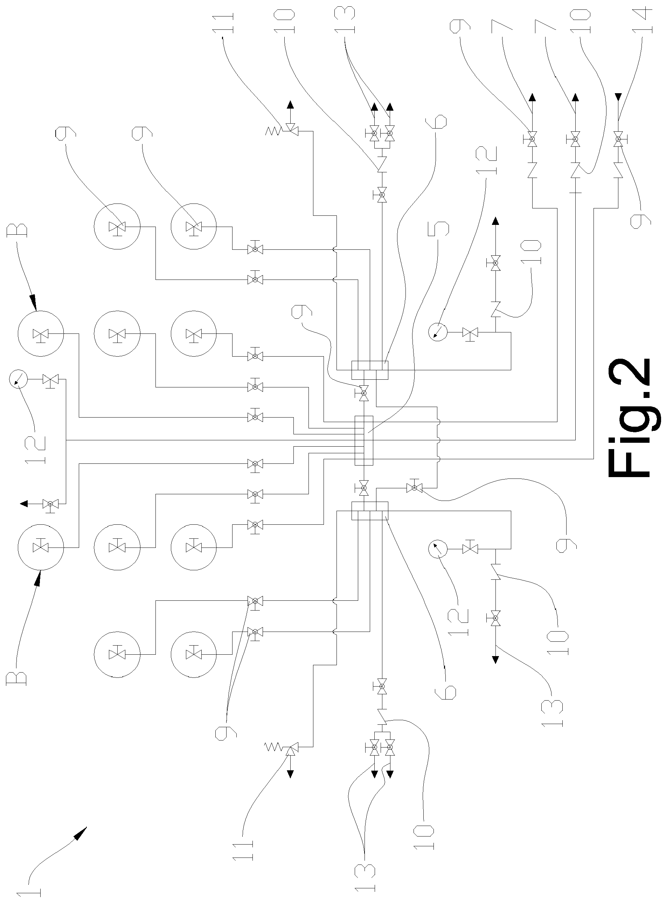

In accordance with further embodiments of the present collector system 1, shown schematically in Figures 2 to 4, the collector system 1 advantageously comprises a plurality of outlet fittings 7, each connected to the main collector 5.

The plurality of outlet fittings 7 allows supplying simultaneously a plurality of treatment/storage apparatuses with the fluid coming from the main collector 5.

Again, in the embodiments of the present collector system 1, shown in Figures 1 to 4, the collector system 1 comprises only one main collector 5.

It cannot however be ruled out that the collector system 1 comprises a plurality of main collectors 5, each connected to a corresponding outlet fitting 7.

The collectors 5, 6 therefore connect the various inlet flows and, with the help of the valve assembly 9, 10, 11, convey them to each other and divide them again into one or more outlet flows through the outlet fittings 7.

The collector system 1 conveniently comprises at least one secondary fitting 13 for the exit of the fluid, connected in a fluid-operated manner to the secondary collector 6.

The secondary fitting 13 allows the fluid to escape directly from the secondary collector 6 and its transfer to further treatment/storage apparatuses.

This way, the collector system 1 allows the fluid to be taken only from one or more storage tanks B connected to the secondary collector 6.

Moreover, this embodiment allows the fluid to be delivered from the individual collectors 5, 6 also at different pressures/flow rates according to the needs, thus allowing a particularly versatile control of the cylinder trailer 3 and of the fluid contained in the various storage tanks B.

The presence of the secondary fitting 13 allows, in fact, the feeding of treatment/storage means separate from those fed through the outlet fitting 7, at the same time, thus optimizing the operational timing.

Advantageously, the collectors 5, 6 comprise a plurality of secondary collectors 6 connected to the main collector 5.

This embodiment is particularly effective in the event of the cylinder trailer 3 transporting a large number of storage tanks B and a meticulous control of fluid flows being necessary.

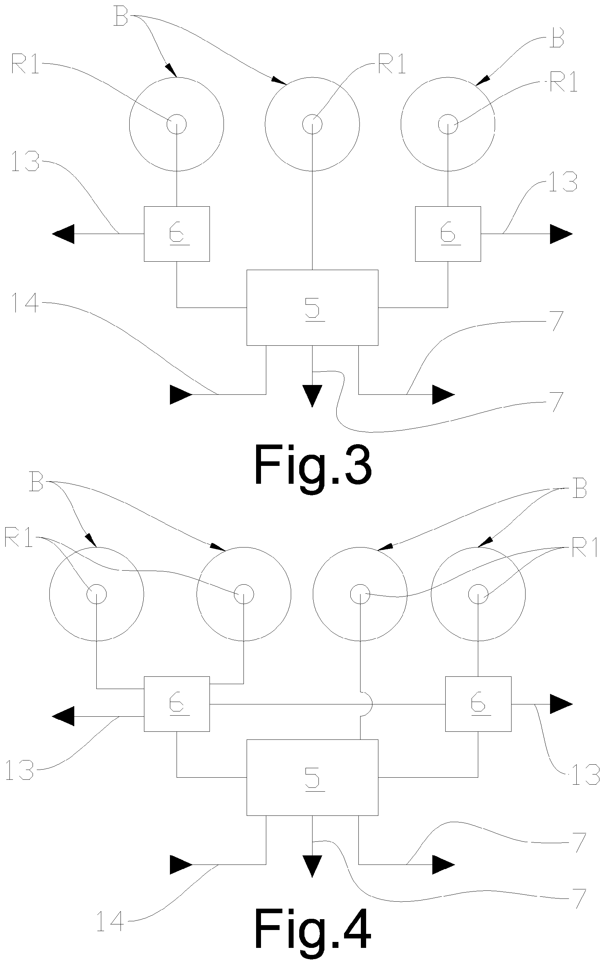

For example, with reference to the embodiments of the present collector system 1 shown in Figures 2 and 4, the number of collectors 5, 6 is less than the number of storage tanks B.

In accordance with a further embodiment of the present collector system 1 schematically shown in Figure 3, the number of collectors 5, 6 is equal to the number of storage tanks B.

It is clear that it is possible to envisage numerous embodiments of the present collector system 1, all falling within the same inventive concept.

The collector system 1 advantageously comprises a plurality of secondary fittings 13 each connected to a corresponding secondary collector 6.

In the embodiments of the present collector system 1 shown in the figures, each secondary collector 6 is connected to a corresponding secondary fitting 13.

It cannot however be ruled out that only some of the secondary collectors 6 are connected to a corresponding secondary fitting 13.

It cannot however be ruled out that at least one of the secondary collectors 6 is connected to a plurality of secondary fittings 13.

Advantageously, at least one of the secondary collectors 6 is connected to at least one of the secondary collectors 6.

The secondary collectors 6, in fact, can be connected to each other in order to convey the fluid flows coming from the corresponding storage tanks B and to deliver them through a corresponding secondary fitting 13.

The collector system 1 conveniently comprises at least one inlet fitting 14 connected to at least one of the collectors 5, 6, and adapted to allow an additional fluid to enter the collectors 5, 6.

Specifically, the inlet fitting 14 is connected to the main collector 5.

For example, the inlet fitting 14 can allow supplementing the flow rate of fluid that can be delivered by the outlet fitting 7 with the additional fluid.

Through this embodiment, e.g., it is possible to connect one or more collector systems 1 of separate cylinder trailers 3 to each other in order to deliver a greater amount of fluid through an individual outlet fitting 7, thus avoiding to connect/disconnect several times the individual outlet fittings 7 to/from the treatment/storage means.

Conveniently, the inlet fitting 14 also allows loading the storage tanks B through the corresponding taking fitting R1, R2.

Specifically, the collector system 1 can be provided with a plurality of inlet fittings 14, each connected to a corresponding collector 5, 6.

This embodiment allows filling the storage tanks B through the respective collectors 5, 6, thus considerably reducing the timing related to this operation.

As mentioned above, the collector system 1 comprises a valve assembly 9, 10, 11 for the regulation of the fluid flows.

In Figure 2 is represented a possible embodiment of present invention that shows in detail the arrangement of the valve assembly 9, 10, 11.

The valve assembly 9, 10, 11 comprises at least one or more main valves 9 adapted to regulate the flow rate and pressure of the fluid depending on the specific needs.

The main valves 9 are, e.g., of the type of ball valves, needle valves, or other types of valves.

The main valves 9 may also be of the manual and/or motorized operation type.

With particular reference to Figure 2, the collector system 1 comprises at least one main valve 9 associated with each taking fitting R1, R2, in order to regulate the fluid flow directly exiting the storage tank B.

The collector system 1 can also comprise one or more main valves 9 positioned between the storage tanks B and the corresponding collectors 5, 6, through which it is possible to further regulate the fluid flows exiting the storage tanks B before these reach the corresponding collector 5, 6.

The collector system 1 comprises one or more main valves 9 positioned between the main collector 5 and the secondary collectors 6 and among the secondary collectors 6 themselves.

Finally, the collector system 1 comprises one or more main valves 9 at the outlet fittings 7, the secondary fittings 13 and the inlet fitting 14.

The valve assembly 9, 10, 11 also comprises one or more secondary valve(s) 10, of the type e.g. of check valves, arranged in the proximity of the outlet fittings 7, the secondary fittings 13 and the inlet fitting 14.

The secondary valves 10 are adapted to ensure the one-way direction of the fluid flow and prevent the fluid flow from traveling the connecting elements 8 in the opposite direction to the predefined one.

The valve assembly 9, 10, 11 also comprises at least one safety device 11 connected to at least one of the collectors 5, 6.

The safety device 11 is of the type of a thermal fuse valve or rupture disc valve and is adapted to allow the fluid to escape from the collector system 1 in case of overpressure.

Appropriately, the collector system 1 also comprises reading means 12 of the fluid pressure inside the collector system itself.

The reading means 12 are, e.g., of the type of one or more pressure gauges with analog and/or digital reading.

The reading means 12 allow detecting and communicating to an operator at least one fluid pressure value at various points in the collector system 1.

The reading means 12, e.g., can be positioned at the outlet fitting 7 and at the at least one secondary fitting 13.

In a possible embodiment, the collector system 1 comprises at least one flow regulating unit 15, of the electronic type, which can be connected to an electronic control unit 16 of the cylinder trailer 3.

The flow regulating unit 15 is configured to regulate the fluid flow exiting at least one of the taking fittings R1, R2, the collectors 5, 6, the outlet fitting 7 and the at least one secondary fitting 13.

Additionally, the flow regulating unit 15 is configured to regulate the inlet fluid flow from the inlet fitting 14.

The present embodiment requires at least the main valves 9 to be motorized and operationally connected to the flow regulating unit 15.

In accordance with this embodiment, the reading means 12 are also conveniently of the electronic type and are connected in turn to the flow regulating unit.

Through the electronic control unit 16 of the cylinder trailer 3 it is, therefore, possible to communicate with the flow regulating unit 15 to regulate the fluid flow exiting the taking fittings R1, R2, the collectors 5, 6, the outlet fitting 7, and the secondary fittings 13 and the incoming flow from the inlet fitting 14.

The present invention further relates to a cylinder trailer 3 for the transport of storage tanks of a fluid provided with the collector system 1 as described above.

The cylinder trailer 3 comprises at least one resting plane 4 movable along a direction of travel D and a plurality of storage tanks B of a fluid, placed resting on said resting plane 4.

The resting plane 4 is substantially parallel to the ground.

Each storage tank B comprises at least one main body E extending along a corresponding longitudinal axis L.

The storage tank B comprises at least one pair of fittings R1, R2 for taking the fluid, arranged at the ends of the main body E, G1, G2.

The main body E, G1, G2 is provided with:
- a central portion E of substantially cylindrical conformation; and
- a pair of end portions G1, G2 associated with the ends of the central portion E.

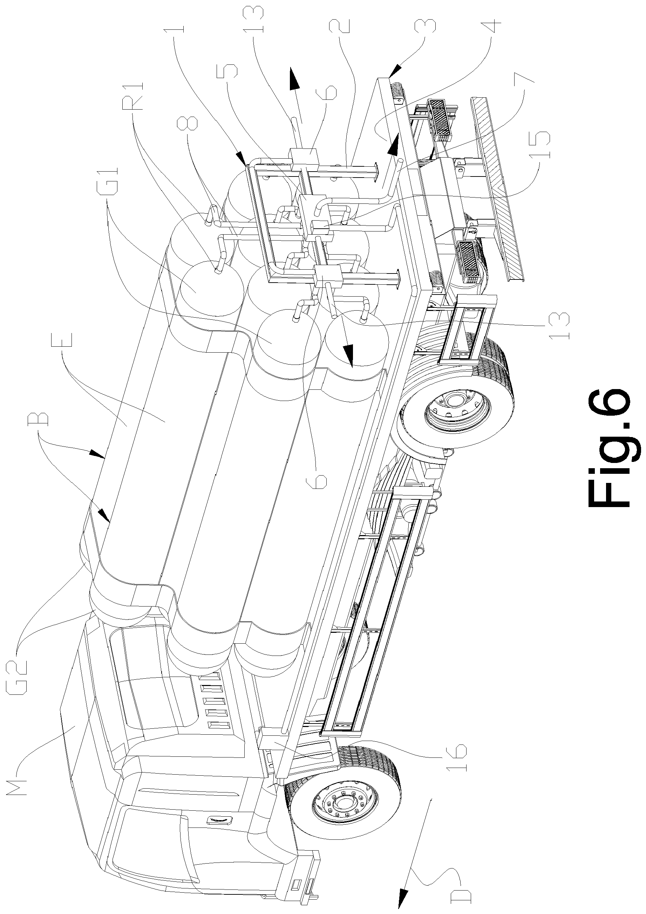

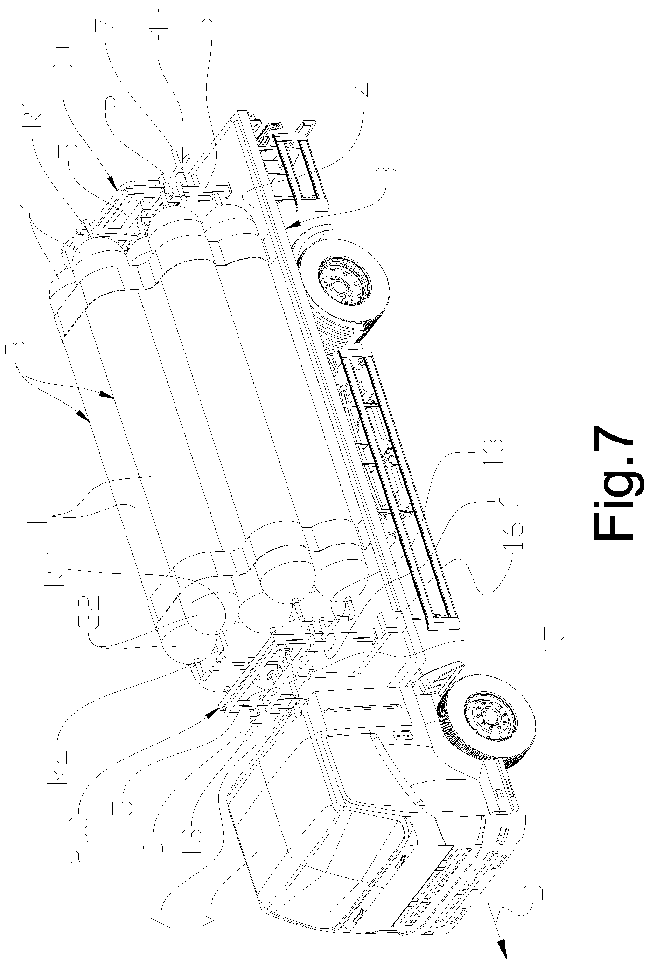

As shown in Figures 6 and 7, the storage tanks B are positioned on the cylinder trailer 3 so that the corresponding longitudinal axes L are arranged substantially parallel to the resting plane 4 and to the direction of travel D.

Each storage tank B, therefore, comprises a first end portion G1 positioned behind the cylinder trailer 3 with respect to the direction of travel D and a second end portion G2 positioned in front of the cylinder trailer 3 with respect to the direction of travel D.

The taking fittings R1, R2 are associated with the end portions G1, G2.

In particular, a first fitting R1 is associated with the first end portion G1 and a second fitting R2 is associated with the second end portion G2.

In other words, each of the storage tanks B comprises at least one first taking fitting R1 located behind the resting plane 4 with respect to the direction of travel D and at least one second taking fitting R2 located in front of the resting plane 4 with respect to the direction of travel D.

The cylinder trailer 3 according to the invention comprises at least one collector system 1, 100, 200 of the fluid, comprising:
- at least one sustaining structure 2 associated with the resting plane 4;
- a plurality of collectors 5, 6 of the fluid, associated with the sustaining structure 2, each one connected in a fluid-operated manner to one or more storage tanks B through the corresponding taking fitting R1, R2; and
- at least one outlet fitting 7 of the fluid, connected in a fluid-operated manner to one of the collectors 5, 6.

The cylinder trailer 3 comprises at least one electronic control unit 16.

The electronic control unit 16 is configured to control and manage one or more electrical and/or electronic devices associated with the cylinder trailer 3 and adapted to the operation of the latter.

In particular, the electronic control unit 16 is operationally connected to the flow regulating unit 15 of the collector system 1.

Conveniently, through the electronic control unit 16 it is possible to control the flow regulating unit 15 so as to operate the main valves 9 and regulate the fluid flow exiting at least one of the taking fittings R1, R2, the collectors 5, 6, the outlet fitting 7 and the at least one secondary fitting 13.

Appropriately, the collector system 1 is connected to one of the first fittings R1 and the second fittings R2.

In a first embodiment of the present cylinder trailer 3 shown in Figure 6, the collector system 1 is connected to the storage tanks B at the first fittings R1.

As mentioned above, the first fittings R1 are located behind the cylinder trailer 3 and are generally more accessible than the second fittings R2.

It cannot however be ruled out that the collector system 1 can be connected to the second fittings R2.

In a second embodiment shown in Figure 7, the cylinder trailer 3 comprises at least one rear collector system 100 connected to the first fittings R1 and at least one front collector system 200 connected to the second fittings R2.

This embodiment allows exploiting the potentialities of the cylinder trailer 3 to the top and allows further increasing the number of possible treatment/storage means that can be supplied with an individual cylinder trailer 3.

Each of the collector systems 100, 200 is conveniently provided with a corresponding flow regulating unit 15 and the electronic control unit 16 of the cylinder trailer 3 is operationally connected to both.

It has in practice been ascertained that the described invention achieves the intended objects and in particular it is emphasized the fact that the present collector system for cylinder trailers allows a flexible control of the fluid contained inside the storage tanks.

In addition, the collector system according to the invention allows selecting and delivering the fluid contained in one or more storage tanks, leaving the others unchanged.

Finally, the present invention allows selecting and delivering the fluid from both fittings of each storage tank.

## Claims

1. Collector system (1) for cylinder trailers, **characterized by** the fact that it comprises:
- at least one sustaining structure (2) associable with a cylinder trailer (3) intended for the transport of a plurality of storage tanks (B) of a fluid, each of said storage tanks (B) comprising:
- at least one main body (E, G1, G2) of elongated conformation; and
- at least one taking fitting (R1, R2) for taking said fluid from said storage tank (B), associated with at least one end of said main body (E, G1, G2);
- a plurality of collectors (5, 6) of said fluid, associated with said sustaining structure (2), each one connected in a fluid-operated manner to one or more of said storage tanks (B) through the corresponding taking fitting (R1, R2); and
- at least one outlet fitting (7) of said fluid, connected in a fluid-operated manner to one of said collectors (5, 6).

2. Collector system (1) according to claim 1, **characterized by** the fact that said collectors (5, 6) comprise a main collector (5) connected to said outlet fitting (7) and at least a secondary collector (6) connected to said main collector (5).

3. Collector system (1) according to claim 2, **characterized by** the fact that said collectors (5, 6) comprise a plurality of said secondary collectors (6) connected to said main collector (5).

4. Collector system (1) according to claim 3, **characterized by** the fact that at least one of said secondary collectors (6) is connected to at least another of said secondary collectors (6).

5. Collector system (1) according to one or more of claims 2 to 4, **characterized by** the fact that it comprises at least one secondary fitting (13) for said fluid outlet, connected in a fluid-operated manner to a corresponding secondary collector (6).

6. Collector system (1) according to one or more of the preceding claims, **characterized by** the fact that it comprises at least one inlet fitting (14) connected to at least one of said collectors (5, 6) and adapted to allow an additional fluid to enter said collectors (5, 6).

7. Collector system (1) according to one or more of the preceding claims, **characterized by** the fact that it comprises at least one safety device (11) connected to at least one of said collectors (5, 6).

8. Collector system (1) according to one or more of claims 5 to 7, **characterized by** the fact that it comprises at least one flow regulating unit (15), of the electronic type, which can be connected to an electronic control unit (16) of said cylinder trailer (3), said flow regulating unit (15) being configured to regulate the fluid flow exiting at least one of said taking fittings (R1, R2), said collectors (5, 6), said outlet fitting (7) and said at least one secondary fitting (13).

9. Cylinder trailer (3) for the transport of storage tanks of a fluid, comprising:
- at least one resting plane (4) movable along a direction of travel (D);
- a plurality of storage tanks (B) of a fluid, placed resting on said resting plane (4), each of said storage tanks (B) comprising:
- at least one main body (E, G1, G2) of elongated conformation; and
- at least one taking fitting (R1, R2) for taking said fluid from said storage tank (B), associated with at least one end of said main body (E, G1, G2);
**characterized by** the fact that it comprises at least one collector system (1) of said fluid comprising:
- at least one sustaining structure (2) associated with said resting plane (4);
- a plurality of collectors (5, 6) of said fluid, associated with said sustaining structure (2), each one connected in a fluid-operated manner to one or more of said storage tanks (B) through the corresponding taking fitting (R1, R2); and
- at least one outlet fitting (7) of said fluid, connected in a fluid-operated manner to one of said collectors (5, 6).

10. Cylinder trailer (3) according to claim 9, **characterized by** the fact that said collectors (5, 6) comprise a main collector (5) connected to said outlet fitting (7) and at least one secondary collector (6) connected to said main collector (5).

11. Cylinder trailer (3) according to claim 10, **characterized by** the fact that said collectors (5, 6) comprise a plurality of said secondary collectors (6) connected to said main collector (5).

12. Cylinder trailer (3) according to claim 10 or 11, **characterized by** the fact that said collector system (1) comprises at least one secondary fitting (13) for the exit of said fluid, connected in a fluid-operated manner to a corresponding secondary collector (6).

13. Cylinder trailer (3) according to claim 12, **characterized by** the fact that it comprises at least one electronic control unit (16), said collector system (1) comprising at least one flow regulating unit (15), of the electronic type, operationally connected to said electronic control unit (16) and configured to regulate the fluid flow exiting at least one of said taking fittings (R1, R2), said collectors (5, 6), said outlet fitting (7) and said at least one secondary fitting (13).

14. Cylinder trailer (3) according to one or more of claims 9 to 13, **characterized by** the fact that each of said storage tanks (B) comprises at least one first taking fitting (R1, R2), located behind said resting plane (4) with respect to said direction of travel (D) and at least one second taking fitting (R1, R2) located in front of said resting plane (4) with respect to said direction of travel (D), said collector system (1) being connected to one of either said first fittings (R1) or said second fittings (R2).

15. Cylinder trailer (3) according to one or more of claims 9 to 14, **characterized by** the fact that it comprises at least one rear collector system (100) connected to said first fittings (R1) and at least one front collector system (200) connected to said second fittings (R2).
